Europäisches Patentamt

European Patent Office

Office européen des brevets

(19)

(11) Veröffentlichungsnummer: **0 005 542**
**B1**

(12) **EUROPÄISCHE PATENTSCHRIFT**

(45) Veröffentlichungstag der Patentschrift: **30.06.82**

(21) Anmeldenummer: **79101500.1**

(22) Anmeldetag: **16.05.79**

(51) Int. Cl.³: **G 01 G 13/00, B 60 P 5/00, B 65 G 53/28**

(54) Vorrichtung zur Abgabe abgemessener Mengen feinkörnigen Schüttgutes.

(30) Priorität: **16.05.78 DE 2821372**

(43) Veröffentlichungstag der Anmeldung:
**28.11.79 Patentblatt 79/24**

(45) Bekanntmachung des Hinweises auf die Patenterteilung:
**30.06.82 Patentblatt 82/26**

(84) Benannte Vertragsstaaten:
**BE FR GB LU NL SE**

(56) Entgegenhaltungen:
**CH - A - 430 245**
**DE - A - 2 437 799**
**DE - B - 1 272 227**
**DE - C - 255 849**
**DE - C - 276 113**
**DE - C - 544 794**
**DE - U - 1 938 458**
**GB - A - 1 371 375**

(73) Patentinhaber: **von Bennigsen-Mackiewicz, Andreas, Dipl.-rer.pol.**
**Mühlenstrasse 17**
**D-3211 Banteln (DE)**

(73) Patentinhaber: **von Bennigsen-Mackiewicz, Christoph**
**Mühlenstrasse 17**
**D-3211 Banteln (DE)**

(72) Erfinder: **von Bennigsen-Mackiewicz, Andreas, Dipl.-rer.pol.**
**Mühlenstrasse 17**
**D-3211 Banteln (DE)**
Erfinder: **von Bennigsen-Mackiewicz, Christoph**
**Mühlenstrasse 17**
**D-3211 Banteln (DE)**

(74) Vertreter: **Wehser, Wulf, Dipl.-Ing. et al,**
**Roscherstrasse 12**
**D-3000 Hannover 1 (DE)**

# Vorrichtung zur Abgabe abgemessener Mengen feinkörnigen Schüttgutes

Die Erfindung betrifft eine Vorrichtung zur Abgabe abgemessener Mengen feinkörnigen Schüttgutes, insbesondere von Mehl, aus wenigstens einem transportablen Silobehälter, mit einer einen Meßbehälter mit einer pneumatischen Auslaufanordnung aufweisenden Waage und einer zwischen dem Silobehälter und dem Meßbehälter angeordneten Förderleitung, die durch auf den Meßbehälter bei dessen Füllung wirkenden Unterdruck beaufschlagbar ist.

Bei einer bekannten offenkundig vorbenutzten Anordnung dieser Art ist ein einzelner Meßbehälter vorgesehen, der zusammen mit dem Silobehälter und den zugehörigen Fördereinrichtungen auf einer transportablen Grundplatte aufgebaut ist. Diese bekannte Anordnung wird unter anderem zur Auslieferung von abgegrenzten Mengen von Mehl an Bäckereien verwendet.

Nachteilig bei dieser bekannten Anordnung ist es, daß sich die Auslieferung des Mehls deswegen verzögert, weil die Förderung während der Wiege- und Meßzeit stillgesetzt werden muß.

Die Förderleistung der bekannten Anordnung ist mithin wegen der Stillstandzeit relativ gering, so daß sich die Auslieferzeiten verlängern. Es kommt also bei der bekannten Anordnung zu relativ hohen Kosten, insbesondere was die Ausnutzung der Fahrzeuge und die Personalkosten angeht.

Der Erfindung liegt demgemäß die Aufgabe zugrunde, eine Anordnung der eingangs genannten Art so auszubilden, daß die Förderleistung erheblich gesteigert wird.

Diese Aufgabe wird erfindungsgemäß dadurch gelöst, daß zwei Waagen vorgesehen sind, deren Meßbehälter wechselweise an die zum Silobehälter führende Förderleitung anschließbar sind, wobei während der Füllzeit des einen Meßbehälters die Ausförderung des Schüttgutes aus dem anderen Meßbehälter erfolgt und daß die Unterdruckleitung jedes Meßbehälters wechselweise an die Saugseite und die Auslaufanordnung jedes Meßbehälters wechselweise an die Druckseite eines für beide Meßbehälter gemeinsamen Gebläses anschließbar sind.

Mit dieser Anordnung wird erreicht, daß die Förderleistung gegenüber den bekannten Anordnungen mit nur geringfügigem Mehraufwand an Bauraum verdoppelt werden kann, so daß sich die Auslieferzeiten um die Hälfte verkürzen.

Die wechselweise vorzunehmende aber gleichzeitige Füllung und Entleerung der beiden Meßbehälter ermöglicht es, diese trotz großer Förderleistung relativ klein zu halten. Damit ergibt sich gegenüber der bekannten Anordnung, die mit einem relativ großen Meßbehälter arbeitet, trotz der Verwendung zweier Meßbehälter der Vorteil einer verhältnismäßig kleinen und kompakten Bauweise der Gesamtanordnung. Außerdem wird ein und dasselbe Gebläse sowohl für den Füllvorgang als auch für den Entleerungsvorgang genutzt, so daß auch insoweit sowohl technischer Aufwand als auch Bauraum als auch Energie eingespart wird, letzteres insbesondere deswegen, weil nicht eine Seite des Gebläses ins Freie arbeitet.

Zwar ist eine andere Anordnung bekannt (CH—A—430 245), bei welcher zwei Waagen vorgesehen sind, deren Meßbehälter wechselweise an eine gemeinsame Förderleitung anschließbar sind und wobei mittels eines gemeinsamen Gebläses während der Füllzeit des einen Meßbehälters die Ausförderung des Schüttgutes aus dem anderen Meßbehälter erfolgt, jedoch sind dort die Auslaufanordnungen der beiden Meßbehälter nicht wechselweise an die Druckseite des Gebeläses anschließbar. Bei einer anderen bekannten Anordnung (GB—A—1 371 375) ist ein gemeinsames Gebläse vorgesehen, dessen Saug- und Druckseiten wechselweise an zwei wechselweise zu entleerende Behälter anschließbar sind. Eine Verbindung des Gebläses mit Auslaufanordnungen ist jedoch nicht vorgesehen.

Mit der erfindungsgemäßen Anordnung kann während des Entleerungsvorganges des einen Meßbehälters am Ende des Füllvorganges des anderen Meßbehälters für einen Druckaufbau für den nachfolgenden Entleerungsvorgang dieses Meßbehälters Sorge getragen werden. Auf diese Weise läßt sich zusätzlich neben der Verkürzung der Auslieferungszeiten auf die Hälfte gegenüber der bekannten Anordnung ein weiterer Zeitvorteil erreichen, denn dort muß vor jedem Entleerungsvorgang zusätzlich erst der Druck im Meßbehälter aufgebaut werden.

Für die Steuerung der wechselweisen Beaufschlagung der beiden Meßbehälter ist es besonders vorteilhaft, wenn jedem Meßbehälter wenigstens ein dessen Füllmenge erfassendes Meß- und Anzeigegerät zugeordnet ist, das die wechselweise Beaufschlagung der Meßbehälter auslöst, da hierdurch eine sehr exakte Steuerung möglich ist. Eine besonders vorteilhafte und einfache Konstruktion ergibt sich, wenn jedes Meß- und Anzeigegerät eine Nullstellung und eine Maximalstellung hat, wobei der Entleerungsvorgang des jeweiligen Meßbehälters ausgelöst wird, wenn sich dessen Meß- und Anzeigegerät in der Maximalstellung und das Meß- und Anzeigegerät des anderen Meßbehälters in der Nullstellung befindet. Damit wird erreicht, daß die Entleerung des jeweils gefüllten Behälters erst dann einsetzt, wenn der andere Behälter zuvor vollständig entleert wurde, da im allgemeinen der Füllvorgang schneller vor sich geht als der Entleerungsvorgang. Umgekehrt ist es vorteilhaft, wenn außerdem dafür Sorge getragen ist, daß der Entleerungsvorgang dann beendet wird, wenn das zugehörige Meß- und Anzeigegerät des Meßbehälters die Nullstellung erreicht und wenn sich das Anzeigegerät des anderen Meßbehälters in der Maximalstellung befindet. Damit ist sichergestellt, daß sich nicht beide Meßbehälter gleichzeitig entleeren können.

Zweckmäßigerweise sind die Maximal- und Nullstellungen der Meß- und Anzeigegeräte durch verstellbare Kontakte gebildet, wobei diese Kontakte als berührungslose Schalter ausgebildet sein können. Diese Kontakte können dann durch einen umlaufenden Zeiger od. dgl. des Meß- und Anzeigegerätes beaufschlagt werden.

Um während der Fortdauer des Entleerungsvorganges des einen Behälters nach Beendigung des Füllvorganges des anderen Behälters für einen Druckaufbau in diesem Behälter zu sorgen, ist es vorteilhaft, wenn die jeweilige Auslaufanordnung einen an die vom Gebläse kommende Druckleitung angeschlossenen Ausförderstutzen mit einer Ausförderleitung sowie einer von der Druckleitung in das Innere des Meßbehälters führenden und dem Druckaufbau dienenden Bypassleitung aufweist. Um den Luftstrom an die jeweiligen Gegebenheiten anpassen zu können, ist es vorteilhaft, wenn die Bypassleitung mit einem vorzugsweise von Hand steuerbaren Stellventil versehen ist. Die Druckleitung mündet zweckmäßigerweise im Ausförderstutzen unterhalb einer luftdurchlässigen Membran, die der Fluidisierung des Schüttgutes innerhalb des Ausförderstutzens dient.

Um die oben beschriebene wechselweise Beaufschlagung der Meßbehälter in einfacher Weise vornehmen zu können, ist es vorteilhaft, wenn in der Förderleitung sowie in der Unterdruckleitung und in der Auslaufanordnung jedes Meßbehälters Ventile angeordnet sind, die durch die Meß- und Anzeigegeräte steuerbar sind.

Ferner ist es vorteilhaft, wenn in der Saugleitung dem Gebläse wenigstens ein Ventil mit einer Entlastungsklappe vorgeschaltet ist, durch welches unter Schließung der Saugleitung Luft zur Weiterförderung in die Druckleitung angesaugt werden kann. Damit kann das einzige Gebläse nach Beendigung des Füllvorganges des einen Meßbehälters in der beschriebenen Weise weiterarbeiten, um den Entleerungsvorgang des anderen Meßbehälters zu beenden.

Weiter ist es vorteilhaft, wenn druckseitig dem Gebläse ein weiteres Ventil vorgeschaltet ist, welches es gestattet, während des Füllvorganges die druckseitig anfallende Gebläseluft nach außen abströmen zu lassen.

Die in den einzelnen Leitungen angeordneten Pneumatikventile sind in zweckmäßiger Weise als Elektromagnetventile ausgebildet, da diese sich leicht und einfach steuern lassen.

In der Saugleitung kann außerdem ein Filter angeordnet sein, um ein Übertreten abgesaugter Partikel in das Gebläse und in die Druckleitung zu vermeiden.

Die erfindungsgemäße Anordnung läßt sich in einfacher Weise mittels normaler mechanischer Waagen aber auch mit aufwendigeren Wiegeanordnungen, wie Druckmeßdosen od. dgl. betreiben. In beiden Fällen ist es jedoch besonders vorteilhaft, beide Waagen in einem gemeinsamen Rahmen zusammenzufassen, der gemeinsam auf der transportablen Grundplatte bzw. insbesondere in einem gemeinsamen Container ausgerichtet wird.

Die Verwendung von Druckmeßdosen kann deswegen vorteilhaft sein, weil Druckmeßdosen zur Lieferung der entsprechenden Schaltimpulse herangezogen werden können. Bei einer Verwendung von Druckmeßdosen können die einzelnen Meßbehälter an einem den Container aussteifenden Gestell, und zwar an einer den Behälter übergreifenden Traverse aufgehängt sein, wobei in an sich bekannter Weise die Druckmeßdose zwischengeschaltet ist. Außerdem kann eine Vorrichtung vorgesehen sein, die bei einer Bewegung des Containers, beispielsweise für den Transport, die Meßbehälter am Auslaufstutzen fixiert. Diese Vorrichtung kann in vorteilhafter Weise aus einer mit zwei einseitigen um eine Achse schwenkbaren Hebeln versehenen Klemmvorrichtung bestehen, die das untere Ende des Auslaufstutzens im fixierten Zustand umgreifen.

Um entsprechende Bewegungen der Meßbehälter zu ermöglichen, sind diese zweckmäßigerweise über flexible Zwischenstücke an die einzelnen Leitungen angeschlossen.

Zweckmäßigerweise ist eine Registriervorrichtung vorgesehen, welche einerseits die Anzahl der abgegebenen Mengen und andererseits deren jeweiliges Gewicht registriert bzw. ausdruckt.

Schließlich können mehrere Silobehälter vorgesehen sein, die nacheinander an die Meßbehälter anschließbar sein können. Hierbei ist es zweckmäßig, wenn jeder Silobehälter mit zwei Zweigleitungen versehen ist, die zu den beiden Meßbehältern führen, wobei jeder dieser Zweigleitungen die von den Meß- und Anzeigegeräten steuerbaren Ventile zugeordnet sind, so daß lediglich von dem einen Ventil auf das andere umgeschaltet zu werden braucht, wenn der eine Silobehälter entleert ist. In entsprechender Weise ist die Anordnung von mehr als zwei Meßbehältern möglich.

Die Erfindung wird im folgenden anhand von Ausführungsbeispielen in der Ziechnung näher erläutert.

Fig. 1 zeigt in schematischer Darstellung eine Ausführungsform der erfindungsgemäßen Vorrichtung.

Fig. 2 zeigt in schematischer Darstellung eine Ausführungsform der Auslaufanordnung zur Vorrichtung nach Fig. 1.

Fig. 3 zeigt die Rückansicht eines mit der erfindungsgemäßen Vorrichtung ausgerüsteten Transportfahrzeuges.

Fig. 4 zeigt eine Ausführungsform zur Anordnung einer Druckmeßdose.

Fig. 5 zeigt gemäß der Ansicht V—V nach Fig. 3 eine Arretierungsvorrichtung für das untere Ende des Ausförderstutzens eines Meßbehälters.

Fig. 6 zeigt in Seitenansicht das mit der erfindungsgemäßen Vorrichtung ausgerüstete Transportfahrzeug.

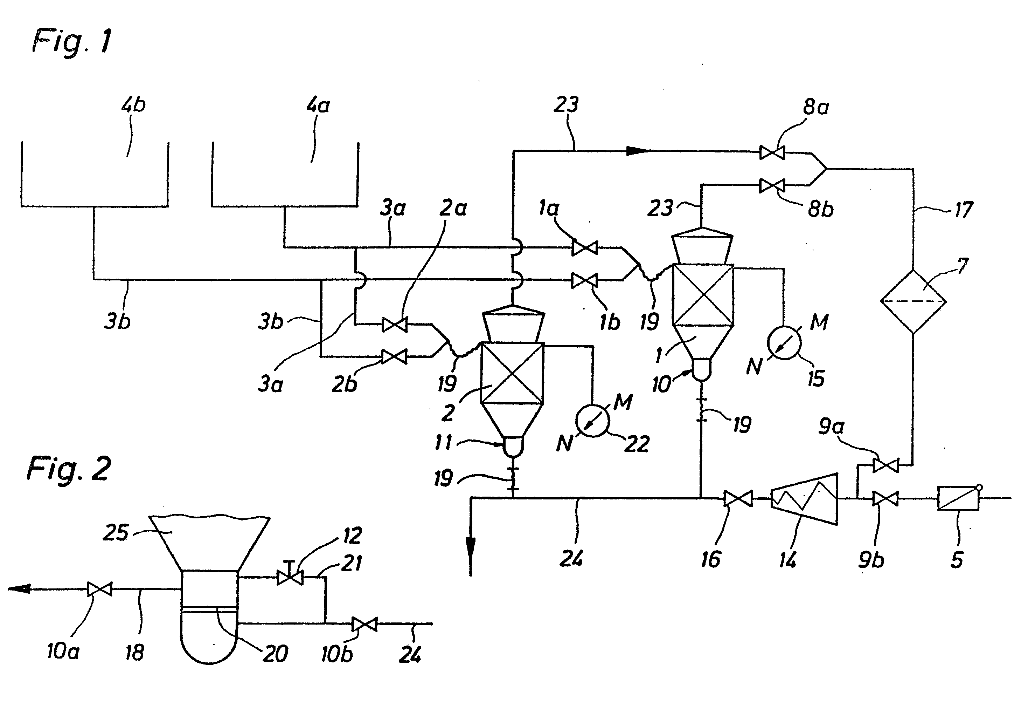

Gemäß Fig. 1 sind zwei Meßbehälter 1 und 2 vorgesehen, die über Förderleitungen 3a und 3b an Silobehälter 4a und 4b angeschlossen sind, wobei in den Förderleitungen Pneumatikventile 1a und 1b bzw. 2a und 2b angeordnet sind. Jeder Meßbehälter ist über einzelne Unterdruckleitungen 23 mit Ventilen 8a und 8b an eine gemeinsame Saugleitung 17 angeschlossen, die einen Filter 7 aufweist. Ferner weist jeder Meßbehälter eine Auslaufanordnung 10 bzw. 11 auf, die an eine Druckleitung 24 angeschlossen sind. Sowohl die Saugleitung 17 als auch die Druckleitung 24 werden von einem gemeinsamen Gebläse 14 beaufschlagt, das saugseitig an die Leitung 17 und druckseitig an die Leitung 24 angeschlossen ist, wobei saugseitig in der Leitung 17 zwei Ventile 9a und 9b vorgesehen sind, von denen das Ventil 9a dem Schließen der Saugleitung 17 und das Ventil 9b dem Öffnen der Saugseite des Gebläses 14 bei geschlossenem Ventil 9a über eine Entlastungsklappe 5 nach außen dient. Ferner ist umgekehrt druckseitig dem Gebläse 14 ein Ventil 16 zugeordnet, das bei geschlossenen Auslaufanordnungen die druckseitig anfallende Gebläseluft nach außen abströmen läßt.

Jeder Meßbehälter ist außerdem mit einem Meß- und Anzeigegerät 15 bzw. 22 versehen, welche der Erfassung der Füllmengen dienen und welche gleichzeitig die oben genannten in der Anordnung vorgesehenen Ventile steuern. Die Meß- und Anzeigegeräte 15 bzw. 22 haben eine Nullstellung N und eine Maximalstellung M, wobei diese Stellungen durch verstellbare Kontakte, berührungslose Schalter od. dgl., gebildet sein können.

Die Meßbehälter sind über flexible Zwischenstücke 19 an die Förderleitung bzw. an die Druckleitung angeschlossen.

Fig. 2 zeigt in schematischer Darstellung eine Ausführungsform einer Auslaufanordnung. Danach sind beidseitig eines Ausförderstutzens 25 des jeweiligen Meßbehälters 1 oder 2 Ventile 10a bzw. 10b vorgesehen, die dem Öffnen bzw. Schließen der jeweiligen Auslaufanordnung dienen.

Am Ausförderstutzen 25 des Meßbehälters 1 und 2 ist ferner jeweils eine Bypaßleitung 21 mit einem Stellventil 12 vorgesehen, so daß ein Teil der Luft zum Zwecke des Druckaufbaues in den Meßbehälter einströmen kann. Der Druckaufbau ist erforderlich, um eine Ausförderung über eine Ausförderleitung 18 zu ermöglichen. Die eigentliche Zuluft über die Druckleitung 24 erfolgt unterhalb einer Membrane 20, die luftdurchlässig ist und der Fluidisierung des Schüttgutes innerhalb des Ausförderstutzens 25 dient.

Die Bypassleitung 21 mit dem Stellventil 12, das von Hand betätigbar ist, gestattet es, in Abhängigkeit von der Art des Schüttgutes den jeweils erforderlichen Luftstrom entsprechend einzustellen.

Die Wirkungsweise der beschriebenen Anordnung ist folgende:

Da beide Meßbehälter 1 und 2 zunächst entleert sind, ist schaltungstechnisch einer der Behälter für den Beginn des Abfüllvorganges fixiert. Es sei angenommen, daß es sich hier um den Meßbehälter 1 nach Fig. 1 handelt.

Bei Beginn des Füllprogramms des ersten Meßbehälters 1 ist eines der Ventile 1a oder 1b geöffnet und gleichzeitig sind die Ventile 8b und 9a geöffnet. Dies hat zur Folge, daß bei einer Betätigung des Gebläses 14 über die Unterdruckleitung 23 die Einförderung in den Meßbehälter 1 über das offene Ventil 1a oder 1b erfolgt. Der Füllvorgang geht nun solange vor sich, bis der Maximalkontakt am Meß- und Anzeigegerät 15, der als berührungsloser Schalter ausgebildet sein kann, betätigt wird, worauf die Ventile 1a oder 1b und 8b geschlossen werden. Während des Füllvorganges ist außerdem das Ventil 16 geöffnet, um die druckseitig anfallende Gebläseluft nach außen abströmen zu lassen. Dieses Ventil 16 wird zusammen mit den Ventilen 1a und 8b bei Erreichen des Maximalkontaktes am Anzeigegerät 15 ebenfalls geschlossen.

Durch das Schließen des Maximalkontaktes des Meß- und Anzeigegerätes 15 wird außerdem eines der Ventile 2a oder 2b geöffnet sowie das zugehörige Ventil 8a in der Saugleitung 23, damit der zweite Meßbehälter 2 beaufschlagt werden kann.

Nunmehr kann in entsprechender Weise der zweite Meßbehälter 2 gefüllt werden. Gleichzeitig mit der Öffnung der Ventile 2a oder 2b und 8a werden die dem ersten Meßbehälter 1 zugeordneten Ventile 10a und 10b seiner Auslaufanordnung 10 (vgl. Fig. 2) geöffnet, so daß die Ausförderung in an sich bekannter Weise beginnt.

Das Füllen des zweiten Meßbehälters 2 und das Ausfördern aus dem ersten Meßbehälter 1 läuft jedoch nur dann ab, wenn der Maximalkontakt am Meß- und Anzeigegerät 15 des ersten Meßbehälters 1 geschlossen ist, gleichzeitig aber sich der Nullkontakt am Meß- und Anzeigegerät 22 des zweiten Meßbehälters 2 noch in seiner Nullstellung N befindet.

Der Füllvorgang des zweiten Meßbehälters 2 läuft nun in der beschriebenen Weise ab, und zwar solange, bis dessen Meß- und Anzeigegerät 22 den ebenfalls dort vorgesehenen und einstellbaren Maximalkontakt M erreicht. Die Einstellung des Maximalkontaktes M erfolgt in Abhängigkeit von dem jeweils gewünschten Füllgewicht. Bei Erreichen des Maximalkontaktes wird die Füllung in der beschriebenen Weise durch Schließen der Ventile 2a und 8a unterbrochen. Außerdem wird das Ventil 9a geschlossen und das Ventil 9b geöffnet. Bei Erreichen des Maximalwertes und Beruhigung der Waage wird außerdem der angezeigte Wert beispielweise durch eine elektronische Speichervorrichtung, registriert.

Da nun im allgemeinen der Füllvorgang schneller vor sich geht als der Ausfördervorgang, muß dafür Sorge getragen sein, daß der Ausfördervorgang aus dem Meßbehälter 1 auch nach Beendigung des Füllvorganges des Meßbehälters 2 weitergeht. Dies wird dadurch erreicht, daß der Ausfördervorgang aus dem Meßbehälter 1 erst dann beendet wird, wenn das Meß- und Anzeigegerät 15 die Nullposition N erreicht hat. Bis zur Erreichnung der Nullposition bleiben also die Ventile 10a und 10b der Auslaufanordnung 10 des Meßbehälters 1 geöffnet, wobei die Luft weiter über die Entlastungsklappe 5 und das Ventil 9b angesaugt und somit in die Druckleitung 24 gefördert wird.

Nach Erreichen des Nullkontaktes N des Meß- und Anzeigegerätes 15 wird die Auslaufanordnung 10 des Meßbehälters 1 geschlossen. Es werden ferner wiederum die Ventile 1a und 8b geöffnet und schließlich wird die Auslaufanordnung 11 des zweiten Behälters 2 geöffnet, so daß der Zyklus in der beschriebenen Weise von vorn beginnen kann, wobei jetzt der Meßbehälter 1 gefüllt und der Meßbehälter 2 entleert wird.

Sofern einer der Silobehälter, im vorliegenden Fall beispielsweise der Silobehälter 4a, entleert ist, wird von der Förderleitung 3a auf die Förderleitung 3b umgeschaltet, indem die entsprechenden Ventile 1b bzw. 2b anstelle der Ventile 1a bzw. 2a beim Füllvorgang beaufschlagt werden.

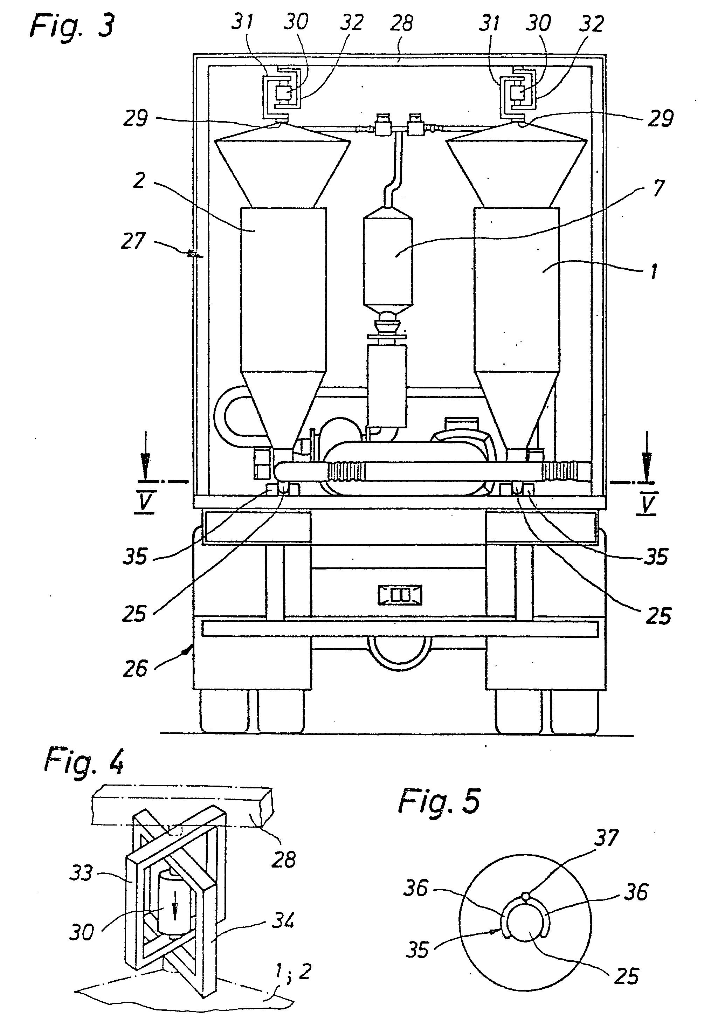

Fig. 3 zeigt die Rückansicht eines mit der erfindungsgemäßen Vorrichtung ausgerüsteten Transportfahrzeuges 26, wobei hier die beiden Meßbehälter 1 und 2 an einem den Container aussteifenden Gestell 27, und zwar an einer die Behälter 1 und 2 übergreifenden Traverse 28 aufgehängt sind. Zwischen den beiden Meßbehältern 1 und 2 ist der Filter 7 (vgl. Fig. 1) angeordnet.

Zwischen einer oberen Halterung 29 der Meßbehälter 1 und 2 und die Traverse 28 sind in an sich bekannter Weise Druckmeßdosen 30 zwischengeschaltet, so daß sich das Füllgewicht der Behälter auf die Druckmeßdosen 30 auswirkt und entsprechend angezeigt werden kann. Beim Ausführungsbeispiel nach Fig. 3 sind hierzu die Druckmeßdosen einseitig übergreifende Halbrahmen 31 und 32 vorgesehen, die zwischen sich die Druckmeßdose 30 aufnehmen.

Eine abgewandelte Ausführungsform hierzu zeigt Fig. 4. Im Gegensatz zur Ausführungsform nach Fig. 3 wird hier die Druckmeßdose 30 von zwei in Draufsicht, vorzugsweise im rechten Winkel angeordneten Vollrahmen 33 und 34 übergriffen.

Wie aus Fig. 3 weiter hervorgeht, kann zur Sicherung des Transportes der Auslaufstutzen 25 des jeweiligen Meßbehälters 1 und 2 durch eine Klemmvorrichtung 35 fixiert sein.

Fig. 5 zeigt entsprechend dem Schnitt V—V diese Klemmvorrichtung in Draufsicht. Wie aus Fig. 5 hervorgeht, kann die Klemmvorrichtung aus zwei einseitigen um eine Achse 37 Schwenkbaren Hebeln bestehen, die das untere Ende des Auslaufstutzens im fixierten Zustand umgreifen.

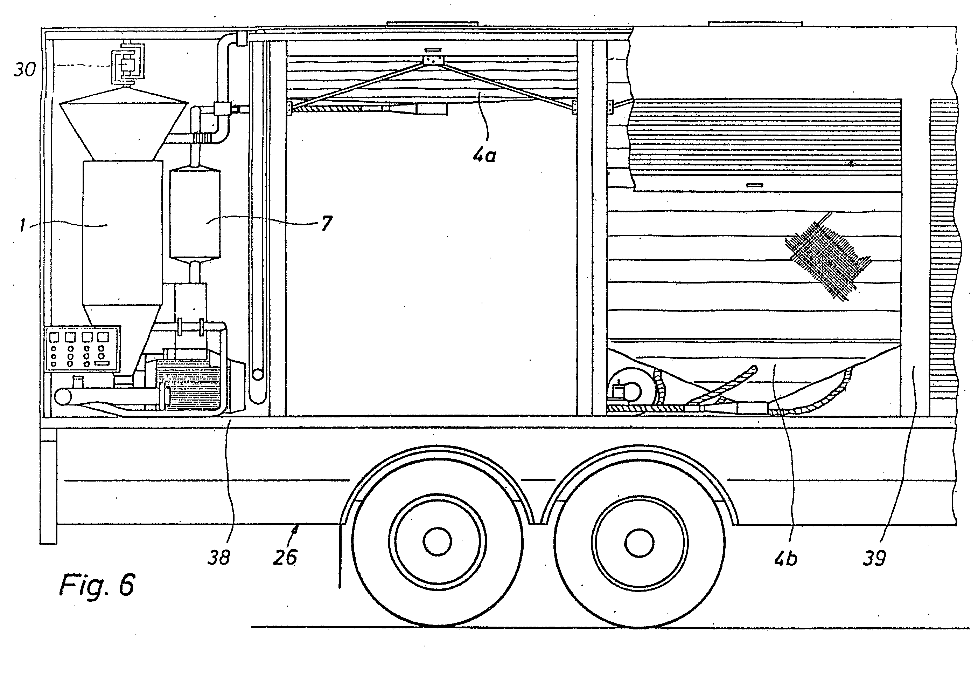

Fig. 6 zeigt das Transportfahrzeug 26 nach Fig. 3 in Seitenansicht und läßt die Zuordnung der beiden Silobehälter 4a und 4b zu den am hinteren Ende des Fahrzeuges angeordneten Meßbehältern 1 und 2 erkennen. Wie aus Fig. 6 weiter hervorgeht, können die Silobehälter 4a und 4b insbesondere aus flexiblem Material bestehen und als in ihrer Höhe zusammenschiebbarer Hubsilo ausgebildet sein.

Aus Fig. 6 geht ferner hervor, daß die Silobehälter 4a und 4b zusammen mit den beiden durch die Meßbehälter 1 und 2 gebildeten Waagen auf einer gemeinsamen transporttablen Grundplatte 38 angeordnet sind, die damit einen Teil des gesamten Containers 39 bildet und diesen trägt.

**Patentansprüche**

1. Vorrichtung zur Abgabe abgemessener Mengen feinkörnigen Schüttgutes, insbesondere von Mehl, aus wenigstens einem transportablen Silobehälter (4a, 4b), mit einer einen Meßbehälter (1, 2) mit einer pneumatischen Auslaufanordnung (10, 11) aufweisenden Waage und einer zwischen dem Silobehälter (4a, 4b) und dem Meßbehälter (1, 2) angeordneten Förderleitung (3a, 3b), die durch auf den Meßbehälter (1, 2) bei dessen Füllung wirkenden Unterdruck beaufschlagbar ist, dadurch gekennzeichnet, daß zwei Waagen vorgesehen sind, deren Meßbehälter (1, 2) wechselweise an die zum Silobehälter (4a, 4b) führende Förderleitung (3a, 3b) anschließbar sind, wobei während der Füllzeit des einen Meßbehälters die Ausförderung des Schüttgutes aus dem anderen Meßbehälter erfolgt und daß die Saugleitung (23) jedes Meßbehälters (1, 2) wechselweise an die Saugseite (17) und die Auslaufanordnung (10, 11) jedes Meßbehälters (1, 2) wechselweise an die Druckseite (24) eines für beide Meßbehälter (1, 2) gemeinsamen Gebläses (14) anschließbar sind.

2. Vorrichtung nach Anspruch 1, dadurch gekennzeichnet, daß während des Entleerungsvorganges des einen Meßbehälters der andere Meßbehälter nach seiner Füllung mit Druck beaufschlagt wird.

3. Vorrichtung nach Anspruch 1 oder 2, dadurch gekennzeichnet, daß jedem Meßbehälter (1, 2) wenigstens ein dessen Füllmenge erfassendes Meß- und Anzeigegerät (15, 22) zugeordnet ist, das die wechselweise Beaufschlagung der Meßbehälter (1, 2) steuert.

4. Vorrichtung nach Anspruch 3, dadurch gekennzeichnet, daß jedes Meß- und Anzeigegerät (15, 22) eine Nullstellung (N) und eine Maximalstellung (M) hat, wobei der Entleerungsvorgang des jeweiligen Meßbehälters (1, 2) ausgelöst wird, wenn sich dessen Meß- und Anzeigegerät (15, 22) in der Maximalstellung (M) und das Meß- und Anziegegerät (15, 22) des anderen Meßbehälters (1, 2) in der Nullstellung (N) befindet.

5. Vorrichtung nach Anspruch 4, dadurch gekennzeichnet, daß die Maximalstellung (M) und die Nullstellung (N) einstellbar sind.

6. Vorrichtung nach Anspruch 5, dadurch gekennzeichnet, daß die Maximal- und die Nullstellung (M, N) der Meß- und Anzeigegeräte (15, 22) durch verstellbare Kontakte gebildet sind.

7. Vorrichtung nach Anspruch 6, dadurch gekennzeichnet, daß die Kontakte Berührungslose Schalter sind.

8. Vorrichtung nach einem der Ansprüche 4 bis 7, dadurch gekennzeichnet, daß der Entleerungsvorgang beendet wird, wenn das zugehörige Meß- und Anzeigegerät (15, 22) des jeweiligen Meßbehälters (1, 2) die Nullstellung (N) erreicht und wenn sich das Anzeigegerät des anderen Meßbehälters in der Maximalstellung (M) befindet.

9. Vorrichtung nach einem der vorhergehenden Ansprüche, dadurch gekennzeichnet, daß die jeweilige Auslaufanordnung (10, 11) einen an die vom Gebläse (14) kommende Druckleitung (24) angeschlossenen Ausförderstutzen (25) mit einer Ausförderleitung (18) sowie einer von der Druckleitung (24) in das Innere des Meßbehälters (1, 2) führenden und dem Druckaufbau dienenden Bypassleitung (21) aufweist.

10. Vorrichtung nach Anspruch 9, dadurch gekennzeichnet, daß die Bypassleitung (21) ein Stellventil (12) aufweist.

11. Vorrichtung nach Anspruch 9 oder 10, dadurch gekennzeichnet daß die Druckleitung (24) im Ausförderstutzen (25) unterhalb einer luftdurchlässigen Membran (20) mündet.

12. Vorrichtung nach einem der vorhergehenden Ansprüche, dadurch gekennzeichnet, daß in der Förderleitung (3a, 3b) sowie in der Saugleitung (23) und in der Auslaufanordnung (10, 11) jedes Meßbehälters (1, 2) Ventile (1a, 1b; 2a, 2b; 8a, 8b; 10a, 10b) angeordnet sind, die durch die Meß- und Anzeigegeräte (15, 22) steuerbar sind.

13. Vorrichtung nach einem der vorhergehenden Ansprüche, dadurch gekennzeichnet, daß in der Saugleitung (17, 23) dem Gebläse (14) wenigstens ein Ventil (9a, 9b) mit einer Entlastungsklappe (5) vorgeschaltet ist, durch welches unter Schließung der Saugleitung (17, 23) Luft zur Weiterförderung in die Druckleitung (24) ansaugbar ist.

14. Vorrichtung nach einem der vorhergehenden Ansprüche, dadurch gekennzeichnet, daß druckseitig dem Gebläse (14) ein weiteres Ventil (16) vorgeschaltet ist, dadurch das während des Füllvorganges die druckseitig anfallende Gebläseluft nach außen abströmt.

15. Vorrichtung nach einem der vorhergehenden Ansprüche, dadurch gekennzeichnet, daß die in den einzelnen Leitungen (3a, 3b; 17, 23, 24) angeordneten Pneumatikventile (1a, 1b; 2a, 2b; 8a, 8b; 9a, 9b; 10a, 10b; 16) als Elektromagnetventile ausgebildet sind.

16. Vorrichtung nach einem der vorhergehenden Ansprüche, dadurch gekennzeichnet, daß in der Saugleitung (17, 23) wenigstens ein Filter (7) angeordneten ist.

17. Vorrichtung nach einem der vorhergehenden Ansprüche, dadurch gekennzeichnet, daß beide Waagen in einem gemeinsamen Rahmen (27) zusammengefaßt sind, der auf einer transportablen Grundplatte (37) eines gemeinsamen Containers (39) angeordnet ist.

18. Vorrichtung nach einem der vorhergehenden Ansprüche, dadurch gekennzeichnet, daß für die Waagen in an sich bekannter Weise Druckmeßdosen (30) Verwendung finden, die die Meß- und Anzeigegeräte (15, 22) beaufschlagen.

19. Vorrichtung nach Anspruch 18, dadurch gekennzeichnet, daß die einzelnen Meßbehälter (1, 2) an einem den Container (39) aussteifenden Rahmen (27), und zwar an einer die Behälter (1, 2) übergreifenden Traverse (28) unter Zwischenschaltung der Druckmeßdosen (30) aufgehängt sind.

20. Vorrichtung nach Anspruch 18 oder 19, dadurch gekennzeichnet, daß die Meßbehälter (1, 2) über flexible Zwischenstücke (19) an die einzelnen Leitungen angeschlossen sind.

21. Vorrichtung nach einem der Ansprüche 18 bis 20, dadurch gekennzeichnet, daß eine Sicherungsvorrichtung (35) vorgesehen ist, die die Meßbehälter (1, 2) am Auslaufstutzen (25) fixiert.

22. Vorrichtung nach Anspruch 21, dadurch gekennzeichnet, daß die Sicherungsvorrichtung aus einer mit zwei einseitigen um eine Achse (37) schwenkbaren Hebeln (36) versehenen Klemmvorrichtung besteht, die das untere Ende des Auslaufstutzens (25) der Meßbehälter (1, 2) im fixierten Zustand umgreifen.

23. Vorrichtung nach einem der vorhergehenden Ansprüche, gekennzeichnet durch eine Registriervorrichtung, welche die Anzahl der abgegebenen Mengen und/oder deren jeweiliges Gewicht registriert und/oder ausdruckt.

24. Vorrichtung nach einem der vorhergehenden Ansprüche, dadurch gekennzeichnet, daß mehrere Silobehälter (4a, 4b) vorgesehen sind, die nacheinander an die Meßbehälter (1, 2) anschließbar sind.

25. Vorrichtung nach Anspruch 24 und 12, dadurch gekennzeichnet, daß jeder Silobehälter (4a, 4b) mit zwei Zweigleitungen (3a, 3b) versehen ist, die zu den beiden Meßbehältern (1, 2) führen, wobei jeder dieser Zweigleitungen (3a, 3b) die von den Meß- und Azeigegeräten (15, 22) steuerbaren Ventile (1a, 1b; 2a, 2b) zugeordnet sind.

26. Vorrichtung nach einem der vorhergehenden Ansprüche, dadurch gekennzeichnet, daß mehr als zwei Meßbehälter vorgesehen sind.

## Revendications

1.—Dispositif destiné à délivrer des quantités dosées de matière en vrac à grains fins, notamment de la farine, á partir d'au moins un conteneur-silo transportable (4a, 4b) avec une balance comportant un conteneur de mesure (1, 2) pourvu d'un dispositif de décharge pneumatique (10, 11) ainsi qu'une conduite de transport (3a, 3b) placée entre le conteneur-silo (4a, 4b) et le conteneur de mesure (1, 2), qui est alimentée par une dépression agissant sur le conteneur de mesure (1, 2) lors de son remplissage, caractérisé en ce qu'il comporte deux balances dont les conteneurs de mesure (1, 2) peuvent être raccordés alternativement à la conduite de transport (3a, 3b) aboutissant aux conteneurs-silo (4a, 4b), la décharge de la matière en vrac d'un conteneur de mesure ayant lieu pendant le remplissage de l'autre, et en ce que la conduite d'aspiration (23) de chaque conteneur de mesure (1, 2) peut être connectée tantôt au côté d'aspiration (17) et au dispositif de décharge (10, 11) de chaque réservoir de mesure (1, 2) tantôt au côté de refoulement (24) d'un ventilateur commun aux deux conteneurs de mesure (1, 2).

2.—Dispositif selon la revendication 1, caractérisé en ce que pendant le vidage de l'un des conteneurs de mesure, l'autre est alimenté en pression après son remplissage.

3.—Dispositif selon la revendication 1 ou 2, caractérisé en ce qu'a chaque conteneur de mesure (1, 2) est rattaché au moins un appareil de mesure et indicateur (15, 22) captant son poids de remplissage, qui commande alternativement l'alimentation des conteneurs de mesure (1, 2).

4.—Dispositif selon la revendication 3, caractérisé en ce que chaque appareil de mesure et indicateur (15, 22) présente une position zéro N et une position de maximum M, le vidage de chaque conteneur de mesure respectif (1, 2) étant déclenché lorsque son appareil de mesure et indicateur (15, 22) se trouve dans la position de maximum M et que l'appareil de mesure et indicateur (15, 22) de l'autre conteneur de mesure (1, 2) se trouve en position zéro N.

5.—Dispositif selon la revendication 4, caractérisé en ce que la position de maximum M et la position zéro N sont réglables.

6.—Dispositif selon la revendication 5, caractérisé en ce que la position maximum M et la position zéro N de l'appareil de mesure et indicateur (15, 22) sont constituées par des contacts réglables.

7.—Dispositif selon la revendication 6, caractérisé en ce que les contacts sont des interrupteurs sans contact.

8.—Dispositif selon l'une revendications 4 à 7, caractérisé en ce que le processus de vidage s'achève lorsque l'appareil de mesure et indicateur correspondant (15, 22) de chaque conteneur de mesure (1, 2) respectif atteint la position zéro N et que l'appareil indicateur de l'autre conteneur de mesure se trouve en position maximum M.

9.—Dispositif selon l'une des revendications précédentes, caractérisé en ce que chaque agencement de décharge (10, 11) comporte une tubulure de décharge (25) branchée sur la conduite de refoulement (24) provenant du ventilateur (14), comportant une conduite de décharge (18, ainsi qu'une conduite de dérivation (21) allant de la conduite de refoulement (24) à l'intérieur du conteneur de mesure (1, 2) et servant à établir la pression.

10.—Dispositif selon la revendication 9, caractérisé en ce que la conduite de dérivation (21) comporte une soupage de réglage (12).

11.—Dispositif selon la revendication 9 ou 10, caractérisé en ce que la conduite de refoulement (24) se trouvant dans la tubulure (25) débouche au-dessous d'une membrane perméable à l'air.

12.—Dispositif selon l'une des revendications précédentes, caractérisé en ce qu'il comporte dans la conduite d'alimentation (3a, 3b), ainsi que dans la conduite d'aspiration (23) et dans le dispositif de décharge (10, 11) de chaque conteneur de mesure (1, 2) des soupages (1a, 1b; 2a, 2b; 8a, 8b; 10a, 10b) qui peuvent être commandées par des appareils de mesure et indicateurs (15, 22).

13.—Dispositif selon l'une des revendications précédentes, caractérisé en ce qu'avant le ventilateur est intercalée dans la conduite d'aspiration (17, 23) au moins une soupage (9a, 9b) comportant un clapet de décharge (5) permettant d'aspirer, en même temps que la fermeture de la conduite d'aspiration (17, 23) de l'air à acheminer dans la conduite de refoulement (24).

14.—Dispositif selon l'une des revendications précédentes, caractérisé en ce qu'avant le ventilateur (14) est intercalée du côté de refoulement une autre soupage (16) qui évacue vers l'extérieur l'air du ventilateur arrivant du côté de refoulement pendant le remplissage.

15.—Dispositif selon l'une des revendications précédentes, caractérisé en ce que les soupages pneumatiques (1a, 1b; 2a, 2b; 8a, 8b; 9a, 9b; 10a, 10b; 16) se trouvant dans les différentes conduites (3a, 3b; 17, 23, 24) sont conformées en soupages électromagnétiques.

16.—Dispositif selon l'une des revendications précédentes, caractérisé en ce qu'au moins au filtre (7) est placé dans la conduite d'aspiration (17, 23).

17.—Dispositif selon l'une des revendications précédentes, caractérisé en ce que les deux balances sont rassemblées dans un bâti commun (27) placé sur un socle transportable (37) d'un conteneur commun (39).

18.—Dispositif selon l'une quelconque des revendications précédentes, caractérisé en ce qu'on utilise pour les balances de façon connue en soi des boîtes de mesure manométriques (30) qui alimentent les appareils de mesure et indicateurs (15, 22).

19.—Dispositif selon la revendication 18, caractérisé en ce que les différents réservoirs de mesure (1, 2) sont suspendus à un bâti renforçant le conteneur (39), et en fait à une traverse (28) surplombant les conteneurs de mesure (1, 2), avec interposition des boîtes de mesure manométriques (30).

20.—Dispositif selon les revendications 18 ou 19, caractérisé en ce que les conteneurs de mesure (1, 2) sont raccordés par des pièces intermédiaires flexibles (19) aux différentes conduites.

21.—Dispositif selon l'une des revendications 18 à 20, caractérisé en ce qu'il comporte un dispositif de sécurité (35) qui fixe les conteneurs de mesure (1, 2) à la tubulure de décharge (25).

22.—Dispositif selon la revendication 21, caractérisé en ce que le dispositif de sûreté comprend un dispositif de serrage comportant deux leviers unilatéraux (36) pivotant autour d'un axe (37) qui embrassent l'extrémité inférieure de la tubulure de décharge (25) du conteneur de mesure (1, 2) dans l'état de fixation.

23.—Dispositif selon l'une des revendications précédentes, caractérisé en ce qu'il comporte un dispositif d'enregistrement qui enregistre et/ou imprime le nombre des doses délivrées et/ou le poids de chacune d'elles.

24.—Dispositif selon l'une des revendications précédentes, caractérisé en ce qu'il comporte plusiers conteneurs-silo (4a, 4b) qui peuvent être raccordés successivement au conteneur de mesure (1, 2).

25.—Dispositif selon les revendications 24 et 12, caractérisé en ce que chaque conteneur-silo (4a, 4b) comporte deux conduites de dérivation (3a, 3b) qui aboutissent aux deux conteneurs de mesure (1, 2), à chacun de ces embranchements (3a, 3b) étant rattachées les soupapes (1a, 1b; 2a, 2b) pouvant être commandées par les appareils de mesure et indicateurs (15, 22).

26.—Dispositif selon l'une quelconque des revendications précédentes, caractérisé en ce qu'il comporte plus de deux conteneurs de mesure.

**Claims**

1. Apparatus for dispensing measured quantities of pulverulent bulk material, more especially of flour, comprising at least one transportable silo container (4a, 4b), with a weigher having a measuring container (1, 2) with a pneumatic discharge arrangement (10, 11), and conveying pipeline (3a, 3b) which is arranged between the silo container (4a, 4b) and the measuring container (1, 2) and which can be acted upon by underpressure which acts on the measuring container (1, 2) upon the filling thereof, characterised in that two weighers are provided, of which the measuring containers (1, 2) are connectable alternately to the conveying pipeline (3a, 3b) leading to the silo container (4a, 4b), so that during the filling time of the one measuring container the discharge of the bulk material from the other measuring container is effected and in that the suction pipeline (23) of each measuring container (1, 2) is connectable alternately to the suction pipeline (17) and the discharge arrangement (10, 11) of each measuring container (1, 2) is connectable alternately to the pressure side (24) of a blower (14) which is common to both measuring containers (1, 2).

2. Apparatus according to claim 1, characterised in that, during the emptying operation of the one measuring container, the other measuring container is, after its filling, subjected to pressure.

3. Apparatus according to claim 1 or 2, characterised in that associated with each measuring container (1, 2) is at least one measuring and indicating instrument (15, 22) which detects the filling amount thereof and which controls the alternate acting-upon of the measuring containers (1, 2).

4. Apparatus according to claim 3, characterised in that each measuring and indicating instrument (15, 22) has a zero position (N) and a maximum position (M), wherein the emptying operation of the respective measuring container (1, 2) is initiated when the measuring and indicating instrument (15, 22) thereof is in the maximum position and the measuring and indicating instrument (15, 22) of the other measuring container (1, 2) is in the zero position (N).

5. Apparatus according to claim 4, characterised in that the maximum position (M) and the zero position (N) are adjustable.

6. Apparatus according to claim 5, characterised in that the maximum position (M) and the zero position (N) of the measuring and indicating instruments (15, 22) are provided by adjustable contacts.

7. Apparatus according to claim 6, characterised in that the contacts are contactless switches.

8. Apparatus according to one of claims 4 to 7, characterised in that the emptying operation is terminated when the pertinent measuring and indicating instrument (15, 22) of the respective measuring container (1, 2) reaches the zero position (N) and when the indicating instrument of the other measuring container is in the maximum position (M).

9. Apparatus according to one of the preceding claims, characterised in that the respective discharge arrangement (10, 11) has a discharge nozzle (25) connected with the pressure pipeline (24) coming from the blower (14) and with a discharge pipeline (18) as well as a by-pass pipeline (21) which leads from the pressure pipeline (24) into the interior of the measuring container (1, 2) and which serves for the pressure build-up.

10. Apparatus according to claim 9, characterised in that the by-pass pipeline (21) has an adjusting valve (12).

11. Apparatus according to claim 9 or 10, characterised in that the pressure pipeline (24) opens out in the discharge nozzle (25) underneath a membrane (20) which is pervious to air.

12. Apparatus according to one of the preceding claims, characterised in that arranged in the conveying pipeline (3a, 3b) as well as in the suction pipeline (23) and in the discharge arrangement (10, 11) of each measuring container (1, 2) are valves (1a, 1b; 2a; 2b; 8a, 8b; 10a, 10b) which are controllable by the measuring and indicating instruments (15, 22).

13. Apparatus according to one of the preceding claims, characterised in that connected in the suction pipeline (17, 23) prior to the blower (14) is at least one valve (9a, 9b) having a relief trap (5) through which, along with closure of the suction pipeline (17, 23), air can be sucked for further conveyance into the pressure pipeline (24).

14. Apparatus according to one of the preceding claims, characterised in that connected on the pressure side prior to the blower (14) is a further valve (16) through which, during the filling operation, the blower air accuring on the pressure side flows away outwardly.

15. Apparatus according to one of the preceding claims, characterised in that the pneumatic valves (1a, 1b; 2a, 2b; 8a, 8b; 9a, 9b; 10a, 10b; 16) arranged in the individual pipelines (3a, 3b; 17, 23, 24) are designed as electromagnetic valves.

16. Apparatus according to one of the preceding claims, characterised in that at least one filter (7) is arranged in the suction pipeline (17, 23).

17. Apparatus according to one of the preceding claims, characterised in that both weighers are combined in a common frame (27) which is arranged on a transportable base plate (37) of a common container (39).

18. Apparatus according to one of the preceding claims, characterised in that used for the weighers, in known 'per se' manner, are pressure measuring cells (30) which act on the measuring and indicating instruments (15, 22).

19. Apparatus according to claim 18, characterised in that the individual measuring containers (1, 2) are suspended from a frame (27) which stiffens the container (39), namely from a traverse (28), extending over the containers (1, 2), with interpolation of the pressure measuring cells (30).

20. Apparatus according to claim 18 or 19, characterised in that the measuring containers (1, 2) are connected by way of flexible intermediate pieces (19) to the individual pipelines.

21. Apparatus according to one of claims 18 to 20, characterised in that a safety device (35) is provided which fixes the measuring containers (1, 2) on the discharge nozzle (25).

22. Apparatus according to claim 21, characterised in that the safety device consists of a clamping device which is provided with two levers (36) which are swingable to one side about an axis (37) and which engage the lower end of the discharge nozzle (25) of the measuring containers (1, 2) in the fixed state.

23. Apparatus according to one of the preceding claims, characterised by a recording device which records and/or prints out the number of the dispensed amounts and/or the respective weight thereof.

24. Apparatus according to one of the preceding claims, characterised in that several silo containers (4a, 4b) are provided which are connectable successively to the measuring containers (1, 2).

25. Apparatus according to claim 24 and 12, characterised in that each silo container (4a, 4b) is provided with two branch pipelines (3a, 3b) which lead to the two measuring containers (1, 2) in which associated with each of these branch pipelines (3a, 3b) are the valves (1a, 1b; 2a, 2b) which are controllable by the measuring and indicating instruments (15, 22).

26. Apparatus as claimed in one of the preceding claims, characterised in that more than two measuring containers are provided.

Fig. 1

Fig. 2

**Fig. 3**

**Fig. 4**

**Fig. 5**

Fig. 6

0 005 542